# EUROPEAN PATENT SPECIFICATION

(11) **EP 3 666 618 B1**
(45) Date of publication and mention of the grant of the patent: **24.05.2023**
(21) Application number: 19806825.6
(22) Date of filing: 24.05.2019
(51) Int. Cl.: B61D 17/22, B60D 5/00

(54) **CONNECTION DIAPHRAGM USING POROUS DOUBLE LIGHTWEIGHT PANEL**
VERBINDUNGSMEMBRAN MIT VERWENDUNG EINER PORÖSEN DOPPELTEN LEICHTEN PLATTE
DIAPHRAGME DE RACCORDEMENT UTILISANT UN DOUBLE PANNEAU LÉGER ET POREUX

(30) Priority: 25.05.2018 KR 20180059473
(43) Date of publication of application: 17.06.2020
(73) Proprietor: Korea Railroad Research Institute, Uiwang-si, Gyeonggi-do 16105 (KR)
(72) Inventor: NOH, Heemin, Suwon-si, Gyeonggi-do 16332 (KR); JANG, Seung-Ho, Gunpo-si, Gyeonggi-do 15875 (KR); KIM, Jaechul, Seoul 05105 (KR); KO, Sangwon, Suwon-si, Gyeonggi-do 16365 (KR)
(74) Representative: Gaunt, Thomas Derrick
(86) International application number: PCT/KR2019/006149
(87) International publication number: WO 2019/225971

(56) References cited:
- EP-A1- 2 335 995
- EP-A1- 3 235 666
- CN-B- 103 129 571
- CN-U- 205 819 207
- CN-Y- 2 561 648
- DE-A1- 4 138 922
- KR-A- 20090 115 285
- KR-B1- 101 465 528
- KR-B1- 101 567 678
- US-A1- 2017 247 119
- US-A1- 2017 247 119

## Description

### BACKGROUND

### 1. Field of Disclosure

The present disclosure of invention relates to a gangway connection fitted to an end of a railway coach for connection, and more specifically the present disclosure of invention relates to a gangway connection enhancing absorption at a relatively lower frequency band so as to minimize an inflow noise from outside of the railway coach.

### 2. Description of Related Technology

Generally, a gangway connection is configured for connecting both ends of railway coaches adjacent to each other, for example, in train, subway, railway vehicle and so on. The gangway connection is a flexible connector, and enables passengers to move from one coach to another without danger of falling from the train.

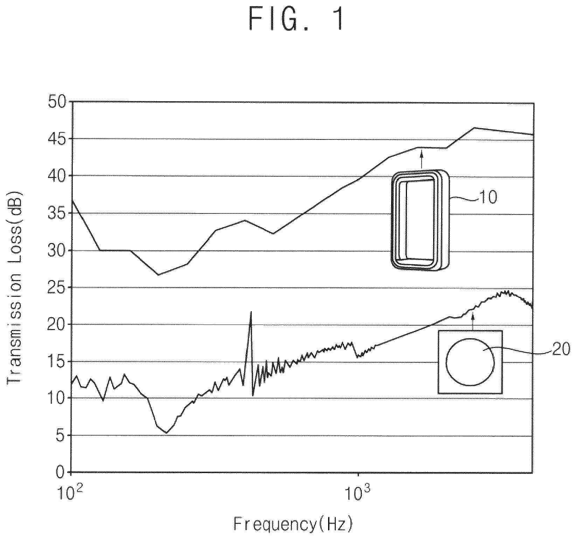

FIG 1 is a graph showing a noise reduction index of each of silicone rubbers used for the conventional gangway connection.

Here, the conventional gangway connection 10 normally includes a silicone rubber 20.

The silicone rubber 20 has elasticity larger than an aluminum metal used for a vehicle body, and thus contraction or expansion is more easily performed and weigh is relatively lighter. However, as illustrated in FIG. 1, sound absorption capability is very low at a low frequency band.

Thus, the sound reduction capability is relatively lower in the conventional gangway connection 10 having the silicone rubber 20, compared to the vehicle body having the aluminum metal, and thus, the noise flows into the inside of the vehicle through the gangway connection 10, more easily.

For example, as illustrated in FIG. 1, the sound absorption capability is very lower at a range between 10² Hz and 10³ Hz, in the conventional gangway connection 10.

Conventionally, as disclosed in Korean laid-open utility model No. 20-2000-0013651, and Korean laid-open patent No. 10-2004-0008936, an absorbing material such as a fiber material is charged into an inside of the gangway connection to increase the sound absorption capability. However, the above-mentioned reduction method is hard to be maintained for the gangway connection and the charged material may have bad effect when the vehicle is driven in a curved railway.

The related prior arts are Korean laid-open utility model No. 20-2000-0013651, and Korean laid-open patent No. 10-2004-0008936.

EP 2335995 A1 discloses dual-bellows elements which comprise a connecting frame for connecting a double gangway bellows with a front wall of a vehicle. The connecting frame has a circumferential mouth-like opening for fixing one bellows element and the connecting frame has a circumferential sealing bar, which is formed with a sealing flap.

### SUMMARY

The present invention is developed to solve the above-mentioned problems of the related arts. The present invention provides a gangway connection capable of enhancing absorption at a relatively lower frequency band so as to minimize an inflow noise from outside of the railway coach and to increase convenience of maintenance.

According to the invention, a gangway connection includes an outer connection and an inner connection. The outer connection has first and second outer layers. The first and second outer layers are spaced apart from each other and overlap with each other. The inner connection is disposed inside of the outer connection, and has first and second inner layers.

Here, the first and second inner layers are spaced apart from each other and overlap with each other. A plurality of first U-shape cross-sections is connected with each other in the first outer layer, and a central portion of each of the first U-shape cross-sections is protruded outwardly. A plurality of second U-shape cross-sections is connected with each other in the second outer layer, and a central portion of each of the second U-shape cross-sections is protruded outwardly. A plurality of third U-shape cross-sections is connected with each other in the first inner layer, and a central portion of each of the third U-shape cross-sections is protruded inwardly. A plurality of fourth U-shape cross-sections is connected with each other in the second inner layer, and a central portion of each of the fourth U-shape cross-sections is protruded inwardly.

Furthermore, an end of the first U-shape cross-section makes contact with and overlap with an end of the second U-shape cross-section, to form a first hole between the first and second U-shape cross-sections. An end of the third U-shape cross-section makes contact with and overlap with an end of the fourth U-shape cross-section, to form a second hole between the third and fourth U-shape cross-sections.

Additionally, a size of the first hole is smaller than that of the second hole.

Moreover, the outer connection and the inner connection are spaced apart from each other, the end of the first U-shape cross-section and the end of the third U-shape cross-section are spaced apart from each other, and the end of the second U-shape cross-section and the end of the fourth U-shape cross-section are spaced apart from each other, to form an air flow space where an air flows.

In an example, the gangway connection may further include a plurality of first fixing pins inserted to the ends of the first and second U-shape cross-sections making contact with each other, to fix the first and second outer layers, and a plurality of second fixing pins inserted to the ends of the third and fourth U-shape cross-sections making contact with each other, to fix the first and second inner layers.

In an example, each of the first fixing pins may have a U shape opened toward the ends of the first and second U-shape cross-sections, and each of the second fixing pins may have a U shape opened toward the ends of the third and fourth U-shape cross-section.

In an example, each of the outer connection and the inner connection may include a silicone rubber or a synthetic rubber.

In an example, an air flow space may be formed between the second outer layer and the second inner layer, and an air layer may be formed in the air flow space.

In an example, a first blocking layer may be formed at an end of the second outer layer, and may block the second outer layer to form a first space between the first blocking layer and the second outer layer. A second blocking layer may be formed at an end of the second inner layer, and may block the second inner layer to form a second space between the second blocking layer and the second inner layer.

In an example, the air flow space may be divided into the first space, the second space, and a third space between the first and second spaces, due to the first and second blocking layers.

In an example, each of the first and second blocking layers may have a cross-sectional shape as one of an outwardly curved U shape, an S shape and a straight line shape.

In an example, each of the first and second blocking layers may be shaped such that a plurality of blocking surfaces is connected with each other to form a ring shape.

In an example, a plurality of holes may be formed through the second outer layer and the second inner layer.

In an example, porosity of the holes may be same as or less than 1%.

According to the present example embodiments, the gangway connection has a dual connection structure having the outer and inner connections, the air flow space is formed between the outer and inner connections, and a plurality of first holes and a plurality of second holes are respectively formed through the outer connection and the inner connection. Thus, the noise is absorbed into an air layer filled with the first holes, the second holes and the air flow space, to increase noise absorption capability at a relatively lower frequency band of the gangway connection.

In addition, when the porous dual light panel is equipped between railway coaches adjacent to each other, a movement or a driving of the railway vehicle is not affected by the porous dual light panel when the railway vehicle travels along a curved railway. Thus, the railway vehicle may travel more easily at the curved railway.

Further, the porous dual light panel includes a silicone rubber and is manufactured more simply, and thus the manufacturing cost may be decreased.

### BRIEF DESCRIPTION OF THE DRAWINGS

FIG 1 is a graph showing a noise reduction index of each of silicone rubbers used for the conventional gangway connection;
FIG 2 is a side view illustrating a connection state of a gangway connection using a porous dual light panel according to an example embodiment of the present invention;
FIG 3 is a perspective view illustrating the gangway connection of FIG 2;
FIG 4 is a side view illustrating the gangway connection of FIG 3;
FIG 5 is a cross-sectional view along a line A-A' of the gangway connection of FIG 3;
FIG 6A and FIG 6B are enlarged views respectively illustrating a portion 'B' and a portion 'C' of FIG 3;
FIG 7A and FIG 7B are cross-sectional views respectively illustrating a first hole and a second hole of the gangway connection of FIG 6A and FIG 6B;
FIG 8 is a cross-sectional view illustrating a first fixing fin and a second fixing fin in the gangway connection of FIG 6A or FIG 6B;
FIG 9A is a partial cross-sectional view illustrating a gangway connection according to another example embodiment of the present invention, and FIG 9B is a partial cross-sectional view illustrating a gangway connection according to still another example embodiment of the present invention;
FIG 10A, FIG 10B, FIG 10C and FIG 10D are partial cross-sectional views illustrating gangway connections according to still another example embodiments of the present invention;
FIG 11 is a conceptual view illustrating a second outer layer and a second inner layer, in a gangway connection according to still another example embodiment of the present invention;
FIG 12 is a graph showing noise characteristics of the gangway connection of FIG 11; and
FIG 13 is a graph showing a sound absorption coefficient of the gangway connection of FIG 2, in a relatively lower frequency band.

*** Reference numerals**

| | |
|---|---|
| 30, 40, 50, 60, 70, 80, 90 : gangway connection | |
| 100 : outer connection | 110 : first outer layer |
| 120 : second outer layer | 111 : first U-shape cross-sections |
| 121 : second U-shape cross-sections | 130 : first holes |
| 200 : inner connection | 210 : first inner layer |
| 220 : second inner layer | 211 : third U-shape cross-sections |
| 221 : fourth U-shape cross-sections | 230 : second holes |
| 300, 301, 305, 306, 307, 308 : air flow space | |
| 302 : first space | 303 : second space |
| 304 : third space | 310 : first blocking layer |
| 320 : second blocking layer | 330, 340, 350, 360 : blocking layer |
| 370 : hole | 410 : first fixing pins |
| 420 : second fixing pins | |

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or
"beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The invention is described more fully hereinafter with reference to the accompanying drawings, in which embodiments of the invention are shown.

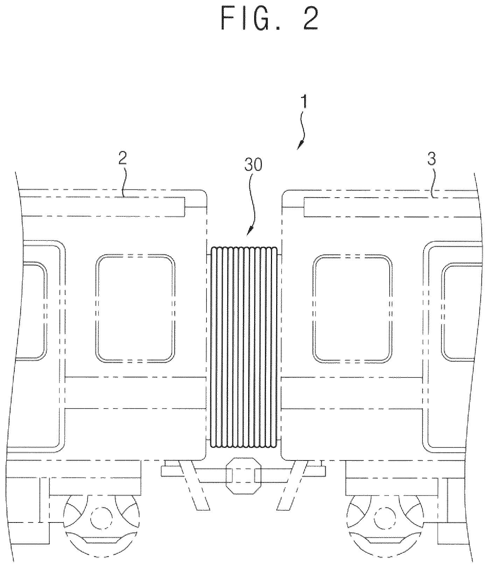

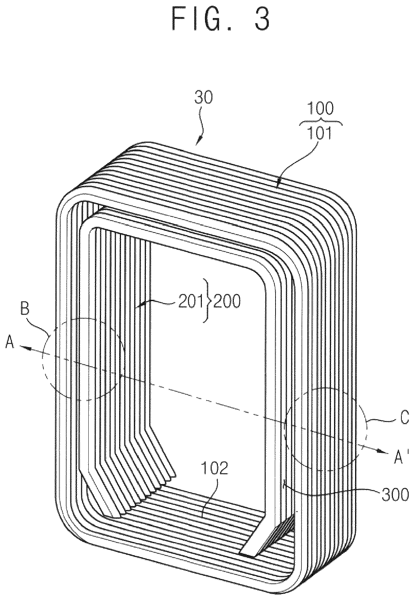

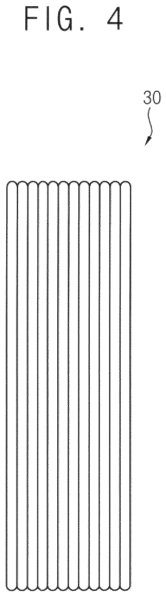

FIG 2 is a side view illustrating a connection state of a gangway connection using a porous dual light panel according to an example embodiment of the present invention. FIG 3 is a perspective view illustrating the gangway connection of FIG. 2. FIG 4 is a side view illustrating the gangway connection of FIG 3.

The gangway connection 30 using a porous dual light panel, as illustrated in FIG 2, is filled to ends of railway coaches 2 and 3 adjacent to each other of a railway vehicle 1, and enables passengers to move from one coach to another. The gangway connection 30 entirely has a rectangular shape outer structure, and absorbs noise using an air inside of the gangway connection when a noise is generated by the railway vehicle 1 or when a noise flows into the gangway connection from outside.

Referring to FIGS. 3 and 4, the gangway connection 30 according to the present example embodiment includes an outer connection 100 and an inner connection 200.

The outer connection 100 includes a plurality of outer bellows layers 101 connected with each other. Each of the outer bellow layers 101 has a bellows type rectangular frame shape. The inner connection 200 is disposed inside of the outer connection 100, and includes a plurality of inner bellows layers 201 connected with each other. Each of the inner bellows layers 201 has a bellows type.

Here, each of the outer bellows layers 101 protrudes outwardly, and each of the inner bellows layers 201 protrudes inwardly.

In addition, the plurality of the outer bellows layers 101, each having a rectangular frame shape, are connected with each other with overlapping with each other, to form the outer connection 100. The plurality of the inner bellows layers 201, each having a shape similar to the rectangular frame shape, are connected with each other with overlapping with each other, to form the inner connection 200. Here, the inner bellows layers 201 overlap with the outer bellows layers 101 except for a bottom surface 102 of the outer bellows layers 101.

Here, although not shown in the figure, a step member may be disposed on the bottom surface 102 of the outer connection 100, to increase convenience of the passengers.

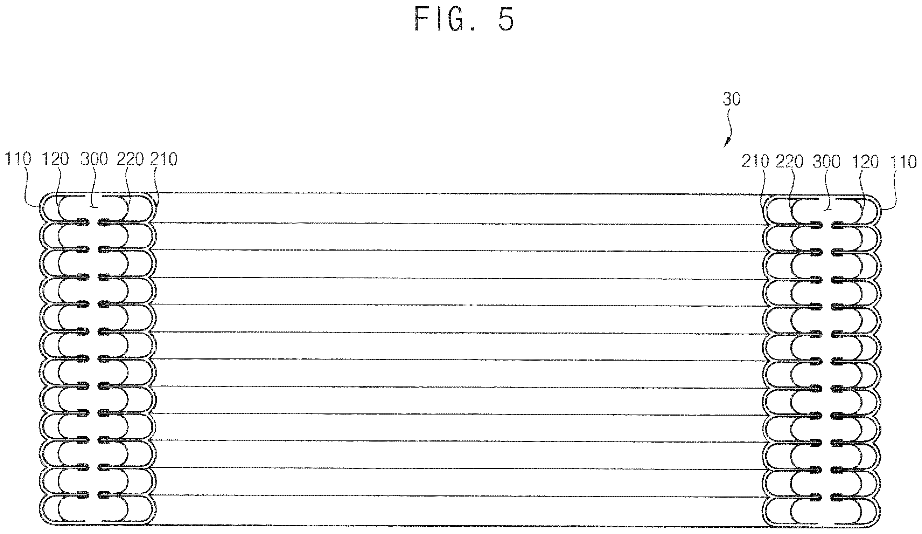

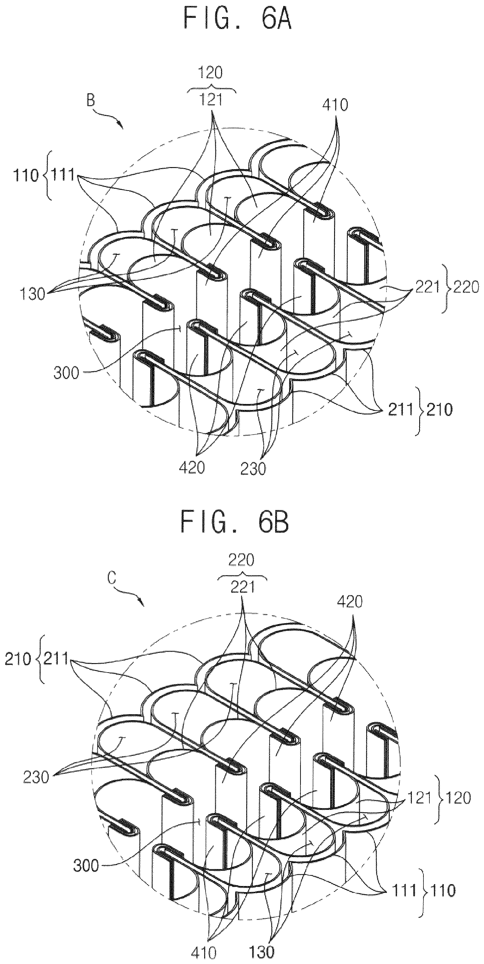

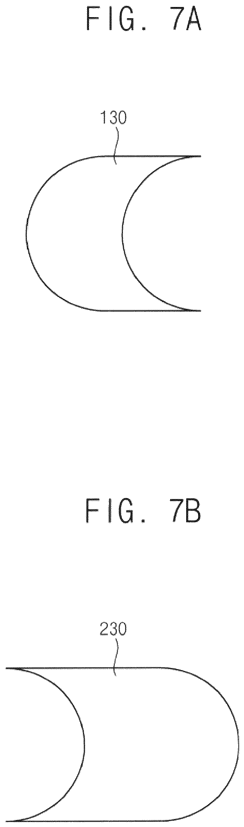

FIG 5 is a cross-sectional view along a line A-A' of the gangway connection of FIG 3. FIG 6A and FIG 6B are enlarged views respectively illustrating a portion 'B' and a portion 'C' of FIG 3. FIG 7A and FIG 7B are cross-sectional views respectively illustrating a first hole and a second hole of the gangway connection of FIG 6A and FIG 6B.

Referring to FIG 5, FIG 6A and FIG 6B, as illustrated in the figure, the outer connection 100 includes first and second outer layers 110 and 120 which are spaced apart from each other and overlap with each other. The inner connection 200 includes first and second inner layers 210 and 220 which are spaced apart from each other and overlap with each other.

Here, the first and second outer layers 110 and 120 are the outer bellows layers 101 explained above, and the first and second inner layers 210 and 220 are the inner bellows layers 201. The first and second outer layers 110 and 120, and the first and second inner layers 210 and 220 are spaced apart from each other by a predetermined distance, to form an air flow space 300 where an air flows.

Thus, when the outer noise moves into the gangway connection 30, which means that the outer noise moves from the outer connection 100 to the inner connection 200, the air inside of the air flow space 300 absorbs the outer noise, to decrease the noise.

Further, each of the outer connection 100 and the inner connection 200 may include a flexible material such as silicone rubber, a synthetic rubber and so on, and thus, even though the railway vehicle 1 travels along the curved railway, the gap between the railway coaches 2 and 3 may be easily curved along the curved railway to enhance stability of the railway vehicle 1.

As illustrated in FIGS. 6A and 6B, a plurality of first U-shape cross-sections 111 is connected with each other, so that the first outer layer 110 is extended. Here, a central portion of each of the first U-shape cross-sections 111 is protruded outwardly. Likewise, a plurality of second U-shape cross-sections 121 is connected with each other, so that the second outer layer 120 is extended. Here, a central portion of each of the second U-shape cross-sections 121 is protruded outwardly.

A plurality of third U-shape cross-sections 211 is connected with each other, so that the first inner layer 210 is extended. Here, a central portion of each of the third U-shape cross-sections 211 is protruded inwardly. Likewise, a plurality of fourth U-shape cross-sections 221 is connected with each other, so that the second inner layer 220 is extended. Here, a central portion of each of the fourth U-shape cross-sections 221 is protruded inwardly.

Here, both ends of the first and second U-shape cross-sections 111 and 121 make contact with each other and overlap with each other, and thus a plurality of first holes 130 is formed between the first and second U-shape cross-sections 111 and 121.

The first U-shape cross-section 111 protrudes outwardly more than the second U-shape cross-section 121, so that the end of the first U-shape cross-section 111 makes contact with the end of the second U-shape cross-section 121 and the first hole 130 is formed between the first and second U-shape cross-sections 111 and 121.

In addition, both ends of the third and fourth U-shape cross-sections 211 and 221 make contact with each other and overlap with each other, and thus a plurality of second holes 230 is formed between the third and fourth U-shape cross-sections 211 and 221.

Here, likewise, the third U-shape cross-section 211 protrudes inwardly more than the fourth U-shape cross-section 221.

Accordingly, a plurality of the first holes 130 is formed between the first and second outer layers 110 and 120, and a plurality of the second holes 230 is formed between the first and second inner layers 210 and 220, and thus the noise is absorbed by an air charged in the first and second holes 130 and 230 and the noise is effectively decreased, when the noise flows into the gangway connection 30.

Further, referring to FIGS. 7A and 7B, a size of the first hole 130 is smaller than that of the second hole 230. In the present example embodiment, considering sound absorption capability according to a ratio between cross-sectional areas of the first and second holes 130 and 230, the cross-sectional area of the second hole 230 may be about 1.6 times as much as that of the first hole 130.

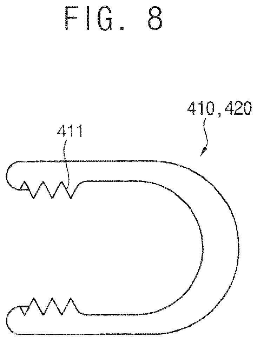

FIG 8 is a cross-sectional view illustrating a first fixing fin and a second fixing fin in the gangway connection of FIG 6A or FIG 6B.

As explained above, both ends of the first and second U-shape cross-sections 111 and 121 make contact with each other and overlap with each other, and both ends of the third and fourth U-shape cross-sections 211 and 221 make contact with each other and overlap with each other.

Here, a first fixing pin 410 shown in FIG 8 is inserted or combined with both ends of the first and second U-shape cross-sections 111 and 121, and thus, the ends of the first and second U-shape cross-sections 111 and 121 are fixed with each other and the first and second outer layers 110 and 120 are fixed with each other with overlapping with each other.

In addition, a second fixing pin 420 shown in FIG 8 is inserted or combined with both ends of the third and fourth U-shape cross-sections 211 and 221, and thus, the ends of the third and fourth U-shape cross-sections 211 and 221 are fixed with each other and the first and second inner layers 210 and 220 are fixed with each other with overlapping with each other.

Here, as illustrated in FIG 8, each of the first fixing pins 410 has a U shape opened toward the ends of the first and second U-shape cross-sections 111 and 121 overlapped with each other.

Each of the second fixing pins 420 also has a U shape opened toward the ends of the third and fourth U-shape cross-sections 211 and 221 overlapped with each other.

Here, each of the first and second fixing pins 410 and 420 has a plurality of protrusions 411 protruded toward an inner surface of the end of the first and second fixing pins 410 and 420, so that the fixing force on the U-shape cross-sections 111 and 121 may be increased. Thus, the ends of the first and second U-shape cross-sections 111 and 121 overlapped with each other, and the ends of the third and fourth U-shape cross-sections 211 and 221 overlapped with each other, may be fixed with more increased fixing force.

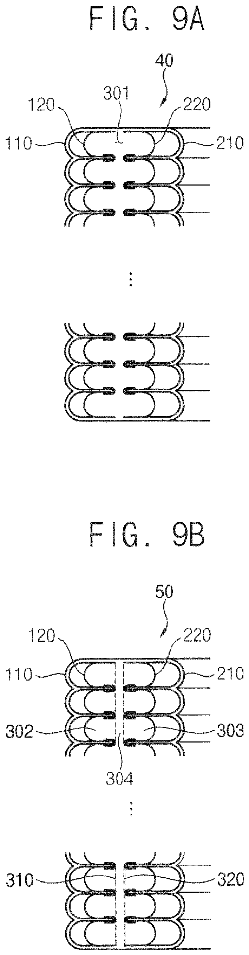

FIG 9A is a partial cross-sectional view illustrating a gangway connection according to another example embodiment of the present invention, and FIG 9B is a partial cross-sectional view illustrating a gangway connection according to still another example embodiment of the present invention.

The gangway connection 40 and 50 according to the present example embodiment is substantially same as the gangway connection 30 in FIG 2 explained above, except that an air layer is formed or an air flow space is divided by blocking layers, and thus same reference numerals are used for the same elements and any repetitive explanation will be omitted.

Referring to FIG 9A, in the gangway connection 40 according to the present example embodiment, the air is flowed into the air flow space 301 to form the air layer. The air flow space 301 is formed between the second outer layer 120 and the second inner layer 220.

Thus, the noise may be absorbed more effectively.

In addition, referring to FIG 9B, in the gangway connection 50, the air flow space 301 is divided by first to third spaces 302, 303 and 304.

A first blocking layer 310 is formed at an end of the second outer layer 120, and the second outer layer 120 is blocked or enclosed by the first blocking layer 310 and a first space 302 is formed inside of the second outer layer 120.

Likewise, a second blocking layer 320 is formed at an end of the second inner layer 220, and the second inner layer 220 is blocked or enclosed by the second blocking layer 320 and a second space 303 is formed inside of the second inner layer 220.

As the first and second blocking layers 310 and 320 are formed as mentioned above, the air flow space 301 is divided into the first space 302, the second space 303, and the third space 304 formed between the first and second spaces 302 and 303.

Accordingly, the air flow space is divided into a plurality of spaces, so that the noise blocking efficiency and the noise absorbing capability are more increased and structural rigidity of the gangway connection may be more enhanced.

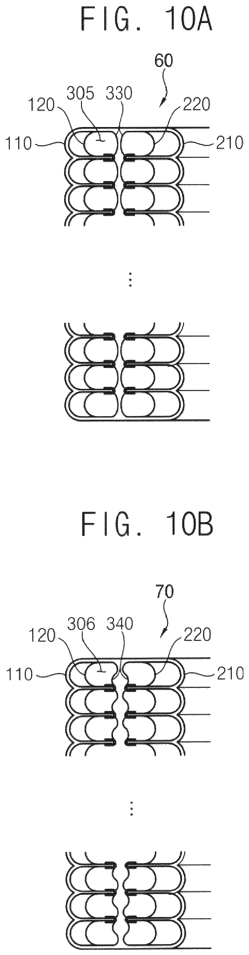

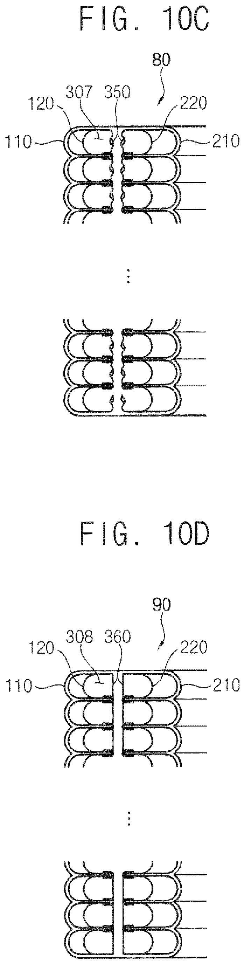

FIG. 10A, FIG 10B, FIG 10C and FIG 10D are partial cross-sectional views illustrating gangway connections according to still another example embodiments of the present invention.

In the present example embodiments, various kinds of first and second blocking layers 310 and 320 are exampled as explained referring to FIG 9B, and thus, various kinds of shapes for the blocking layers 330, 340, 350 and 360 are explained as the example embodiments. Thus same reference numerals are used for the same elements and any repetitive explanation will be omitted.

Referring to FIG 10A, the blocking layer 330 may have a cross-sectional shape as a U shape.

The blocking layer formed at the end of the second outer layer 120 may be protruded outwardly to be the U shape, and the blocking layer formed at the end of the second inner layer 220 may be protruded outwardly to be the U shape, so that the protruded portions of the blocking layers may face each other.

As explained above, the air flow space 305 may be divided into the plurality of spaces by the blocking layer 330.

Referring to FIG 10B, the blocking layer 340 may have a cross-sectional shape as an S shape.

The blocking layer formed at the end of the second outer layer 120 may be protruded outwardly and intruded inwardly to be the S shape, and the blocking layer formed at the end of the second inner layer 220 may be protruded outwardly and intruded inwardly to be the S shape.

As explained above, the air flow space 306 may be divided into the plurality of spaces by the blocking layer 340.

Referring to FIG 10C, a plurality of blocking surfaces is connected with each other with forming a ring shape, and thus the blocking layer 350 is shape such that a circular-like ring shape is formed at a central portion of the blocking layer 350.

The blocking layer formed at the end of the second outer layer 120 is shaped such that a pair of blocking surfaces are fixed and connected with forming the ring shape, and the blocking layer formed at the end of the second inner layer 220 is also shaped such that a pair of blocking surfaces are fixed and connected with forming the ring shape.

As explained above, the air flow space 307 may be divided into the plurality of spaces by the blocking layer 350.

Referring to FIG 10D, the blocking layer 360 may have a cross-sectional shape as a straight line shape.

Both of the blocking layer formed at the end of the second outer layer 120 and the blocking layer formed at the end of the second inner layer 220, have the straight line shape extending vertically.

As explained above, the air flow space 308 may be divided into the plurality of spaces by the blocking layer 360.

Accordingly, the cross-sectional shape of the blocking layer may be formed variously.

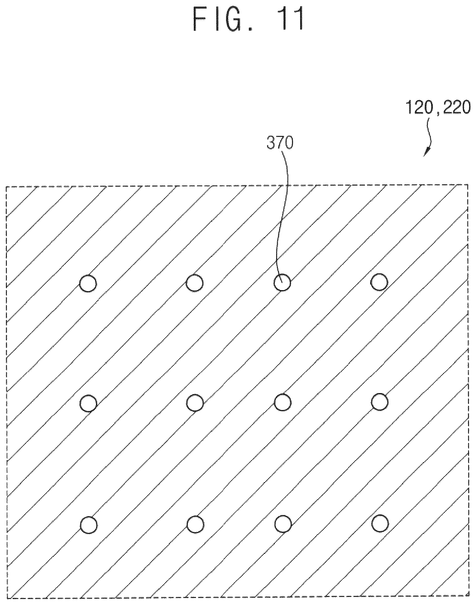

FIG. 11 is a conceptual view illustrating a second outer layer and a second inner layer, in a gangway connection according to still another example embodiment of the present invention.

Referring to FIG 11, in the present example embodiment, a plurality of holes 370 may be formed through the second outer layer 120 and the second inner layer 220, by a predetermined distance or array. Porosity of the holes 370 is same as or less than 1%, or between about 0.2% and about 0.8%.

Thus, the absorbing capability at the relatively lower frequency band may be effectively increased, and specifically the frequency in a range between 100 Hz and 200 Hz may be absorbed more efficiently.

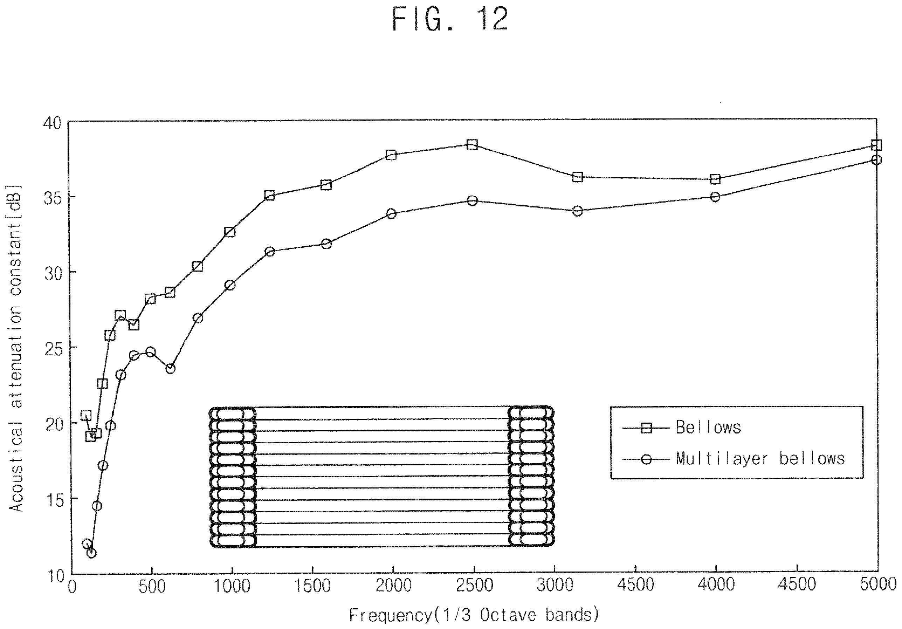

FIG. 12 is a graph showing noise characteristics of the gangway connection of FIG 11.

Referring to FIG 12, the sound or noise absorbing capability in the present example embodiment in which the porous dual light panel is applied to the gangway connection and the holes having porosity substantially same as or less than 1% is formed through the second outer layer and the second inner layer, is better than that in the conventional gangway connection with the bellows shape.

Specifically, the sound or noise absorbing capability may be more efficiently in overall frequency band including high frequency band and low frequency band, compared to the conventional technology.

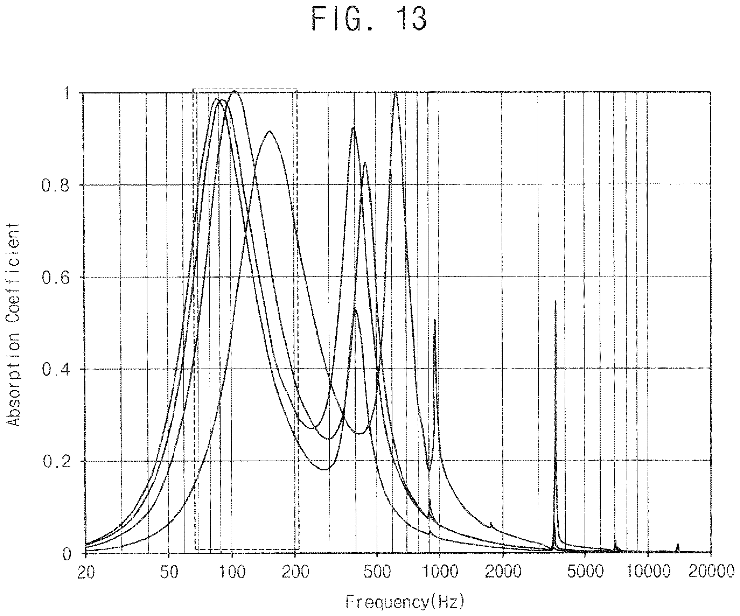

FIG. 13 is a graph showing a sound absorption coefficient of the gangway connection of FIG 2, in a relatively lower frequency band.

In FIG 13, the gangway connection 30, using the porous dual light panel with the first and second holes 130 and 230, each hole having a size of about 1mm and having porosity between about 0.35% and about 0.79%, was tested. Thus, as illustrated in FIG 13, the sound or noise absorbing capability is specifically high at the frequency band between about 80 Hz and about 150 Hz.

According to the present example embodiments, the gangway connection has a dual connection structure having the outer and inner connections, the air flow space is formed between the outer and inner connections, and a plurality of first holes and a plurality of second holes are respectively formed through the outer connection and the inner connection. Thus, the noise is absorbed into an air layer filled with the first holes, the second holes and the air flow space, to increase noise absorption capability at a relatively lower frequency band of the gangway connection.

In addition, when the porous dual light panel is equipped between railway coaches adjacent to each other, a movement or a driving of the railway vehicle is not affected by the porous dual light panel when the railway vehicle travels along a curved railway. Thus, the railway vehicle may travel more easily at the curved railway.

Further, the porous dual light panel includes a silicone rubber and is manufactured more simply, and thus the manufacturing cost may be decreased.

Although the exemplary embodiments of the present invention have been described, it is understood that the present invention should not be limited to these exemplary embodiments but various changes and modifications can be made by one ordinary skilled in the art within the scope of the claims.

## Claims

1. A gangway connection (30, 40, 50, 60, 70, 80, 90) comprising:
an outer connection (100) having first and second outer layers (110, 120), the first and second outer layers being spaced apart from each other and overlapping with each other; and
an inner connection (200) disposed inside of the outer connection, and having first and second inner layers (210,220), the first and second inner layers being spaced apart from each other and overlapping with each other,
wherein a plurality of first U-shape cross-sections (111) is connected with each other in the first outer layer, and a central portion of each of the first U-shape cross-sections is protruded outwardly,
wherein a plurality of second U-shape cross-sections (121) is connected with each other in the second outer layer, and a central portion of each of the second U-shape cross-sections is protruded outwardly,
wherein a plurality of third U-shape cross-sections (211) is connected with each other in the first inner layer, and a central portion of each of the third U-shape cross-sections is protruded inwardly,
wherein a plurality of fourth U-shape cross-sections (221) is connected with each other in the second inner layer, and a central portion of each of the fourth U-shape cross-sections is protruded inwardly,
wherein an end of the first U-shape cross-section makes contact with and overlaps with an end of the second U-shape cross-section, to form a first hole (130) between the first and second U-shape cross-sections,
wherein an end of the third U-shape cross-section makes contact with and overlaps with an end of the fourth U-shape cross-section, to form a second hole (230) between the third and fourth U-shape cross-sections,
wherein a size of the first hole is smaller than that of the second hole,
wherein the outer connection and the inner connection are spaced apart from each other, the end of the first U-shape cross-section and the end of the third U-shape cross-section are spaced apart from each other, and the end of the second U-shape cross-section and the end of the fourth U-shape cross-section are spaced apart from each other, so that an air flow space (300, 301, 305, 306, 307, 308) where an air flows is formed.

2. The gangway connection (30) of claim 1, further comprising:
a plurality of first fixing pins (410) inserted to the ends of the first and second U-shape cross-sections (111,121) making contact with each other, to fix the first and second outer layers (110,120); and
a plurality of second fixing pins (420) inserted to the ends of the third and fourth U-shape cross-sections (211,221) making contact with each other, to fix the first and second inner layers (210,220).

3. The gangway connection (30) of claim 2, wherein each of the first fixing pins (410) has a U shape opened toward the ends of the first and second U-shape cross-sections (111,121),
wherein each of the second fixing pins (420) has a U shape opened toward the ends of the third and fourth U-shape cross-section (211,221).

4. The gangway connection (30) of claim 1, wherein each of the outer connection (100) and the inner connection (200) comprises a silicone rubber or a synthetic rubber.

5. The gangway connection (30) of claim 1, wherein an air flow space (300) is formed between the second outer layer (120) and the second inner layer (220), and an air layer is formed in the air flow space (300).

6. The gangway connection (30) of claim 5, wherein a first blocking layer (310) is formed at an end of the second outer layer (120), and blocks the second outer layer to form a first space (302) between the first blocking layer and the second outer layer,
wherein a second blocking layer (320) is formed at an end of the second inner layer (220), and blocks the second inner layer to form a second space (303) between the second blocking layer and the second inner layer.

7. The gangway connection (30) of claim 6, wherein the air flow space (30) is divided into the first space (302), the second space (303), and a third space (304) between the first and second spaces, due to the first and second blocking layers (310,320).

8. The gangway connection (30) of claim 6, wherein each of the first and second blocking layers (310,320) has a cross-sectional shape as one of an outwardly curved U shape, an S shape and a straight line shape.

9. The gangway connection (30) of claim 6, wherein each of the first and second blocking layers (310,320) is shaped such that a plurality of blocking surfaces is connected with each other to form a ring shape.

10. The gangway connection (30) of claim 5, wherein a plurality of holes (370) is formed through the second outer layer (120) and the second inner layer (220).

11. The gangway connection (30) of claim 10, wherein porosity of the holes (370) is same as or less than 1%.

## Patentansprüche

1. Eine Übergangs-Verbindung (30, 40, 50, 60, 70, 80, 90) umfassend:
Eine Außenverbindung (100) mit einer ersten und einer zweiten Außenschicht (110, 120), die erste und zweite Außenschicht sind mit einem Abstand voneinander getrennt und überlappen einander; und
eine Innenverbindung (200), die innerhalb der Außenverbindung angebracht ist, und eine erste und eine zweite Innenschicht (210, 220) aufweist, die erste und zweite Innenschicht sind mit einem Abstand voneinander getrennt und überlappen einander,
wobei eine Vielzahl von ersten u-förmigen Querschnitten (111) in der ersten Schicht miteinander verbunden sind, und ein mittlerer Abschnitt jedes der ersten u-förmigen Querschnitte nach außen herausragt,
wobei eine Vielzahl von zweiten u-förmigen Querschnitten (121) in der zweiten Außenschicht miteinander verbunden ist, und ein mittlerer Abschnitt jedes der zweiten u-förmigen Querschnitte nach außen herausragt,
wobei eine Vielzahl von dritten u-förmigen Querschnitten (211) in der ersten Innenschicht miteinander verbunden ist, und ein mittlerer Abschnitt jedes der dritten u-förmigen Querschnitte nach innen herausragt,
wobei eine Vielzahl von vierten u-förmigen Querschnitten (221) in der zweiten Innenschicht miteinander verbunden ist, und ein mittlerer Abschnitt jedes der vierten u-förmigen Querschnitte nach innen herausragt,
wobei ein Ende des ersten u-förmigen Querschnitts Kontakt mit einem Ende des zweiten u-förmigen Querschnitts hat und dieses überlappt, um eine erste Öffnung (130) zwischen dem ersten und dem zweiten u-förmigen Querschnitt zu bilden,
wobei ein Ende des dritten u-förmigen Querschnitts Kontakt mit einem Ende des vierten u-förmigen Querschnitts hat und dieses überlappt, um eine zweite Öffnung (230) zwischen dem dritten und vierten u-förmigen Querschnitt zu bilden,
wobei eine Größe der ersten Öffnung kleiner ist als die der zweiten Öffnung, wobei die Außenverbindung und die Innenverbindung mit Abstand voneinander getrennt sind, das Ende des ersten u-förmigen Querschnitts und das Ende des dritten u-förmigen Querschnitts mit Abstand voneinander getrennt sind und das Ende des zweiten u-förmigen Querschnitts und das Ende des vierten u-förmigen Querschnitts mit Abstand voneinander getrennt sind, so dass ein Luftdurchlassbereich (300, 301, 305, 306, 307, 308) gebildet wird, durch den Luft strömt.

2. Die Übergangs-Verbindung (30) nach Anspruch 1, ferner umfassend:
Eine Vielzahl von ersten Fixierstiften (410), die in die Enden des ersten und zweiten u-förmigen Querschnitts (111, 121) eingesetzt sind, um Kontakt zueinander herzustellen und die erste und zweite Außenschicht (110, 120) zu fixieren; und
eine Vielzahl von zweiten Fixierstiften (420), die in die Enden des dritten und vierten u-förmigen Querschnitts (211, 221) eingesetzt sind, um Kontakt zueinander herzustellen und die erste und zweite Innenschicht (210, 220) zu fixieren.

3. Die Übergangs-Verbindung (30) nach Anspruch 2, wobei jeder der ersten Fixierstifte (410) eine U-Form aufweist, die sich zu den Enden des ersten und zweiten u-förmigen Querschnitts (111,121) öffnet,
wobei jeder der zweiten Fixierstifte (420) eine U-Form aufweist, die sich zu den Enden des dritten und vierten u-förmigen Querschnitts (211, 221) öffnet.

4. Die Übergangs-Verbindung (30) nach Anspruch 1, wobei die Außenverbindung (100) und die Innenverbindung (200) einen Silikongummi oder einen synthetischen Gummi umfassen.

5. Die Übergangs-Verbindung (30) nach Anspruch 1, wobei ein Luftdurchlassbereich (300) zwischen der zweiten Außenschicht (120) und der zweiten Innenschicht (220) und eine Luftschicht im Luftdurchlassbereich (300) gebildet wird.

6. Die Übergangs-Verbindung (30) nach Anspruch 5, wobei eine erste Sperrschicht (310) an einem Ende der zweiten Außenschicht (120) gebildet wird, und die zweite Außenschicht daran hindert, einen ersten Bereich (302) zwischen der ersten Sperrschicht und der zweiten Außenschicht zu bilden,
wobei eine zweite Sperrschicht (320) an einem Ende der zweiten Innenschicht (220) gebildet wird und die zweite Innenschicht daran hindert, einen zweiten Bereich (303) zwischen der zweiten Sperrschicht und der zweiten Innenschicht zu bilden.

7. Die Übergangs-Verbindung (30) nach Anspruch 6, wobei der Luftdurchlassbereich (30) in den ersten Bereich (302), den zweiten Bereich (303) und einen dritten Bereich (304) zwischen dem ersten und zweiten Bereich, aufgrund der ersten und zweiten Sperrschicht (310, 320), unterteilt ist.

8. Die Übergangs-Verbindung (30) nach Anspruch 6, wobei die erste und zweite Sperrschicht (310, 320) eine Querschnittsform haben, die eine nach außen gewölbte U-Form, eine S-Form oder eine gerade Linienform sein kann.

9. Die Übergangs-Verbindung (30) nach Anspruch 6, wobei die erste und zweite Sperrschicht (310, 320) so geformt sind, dass eine Vielzahl von Sperrflächen miteinander verbunden ist, um eine Ringform zu bilden.

10. Die Übergangs-Verbindung (30) nach Anspruch 5, wobei eine Vielzahl von Öffnungen (370) durch die zweite Außenschicht (120) und die zweite Innenschicht (220) gebildet wird.

11. Die Übergangs-Verbindung (30) nach Anspruch 10, wobei die Porosität der Öffnungen (370) gleich oder unter 1 % beträgt.

## Revendications

1. Raccordement de passerelle (30, 40, 50, 60, 70, 80, 90) comprenant :
un raccordement extérieur (100) présentant des première et seconde couches extérieures (110, 120), les première et seconde couches extérieures étant espacées l'une de l'autre et se chevauchant l'une sur l'autre ; et
un raccordement intérieur (200) disposé à l'intérieur du raccordement extérieur et présentant des première et seconde couches intérieures (210, 220), les première et seconde couches intérieures étant espacées l'une de l'autre et se chevauchant l'une sur l'autre,
dans lequel une pluralité de premières sections transversales en forme de U (111) sont raccordées les unes aux autres dans la première couche extérieure et une partie centrale de chacune des premières sections transversales en forme de U est en saillie vers l'extérieur,
dans lequel une pluralité de deuxièmes sections transversales en forme de U (121) sont raccordées les unes aux autres dans la seconde couche extérieure et une partie centrale de chacune des secondes sections transversales en forme de U est en saillie vers l'extérieur,
dans lequel une pluralité de troisièmes sections transversales en forme de U (211) sont raccordées les unes aux autres dans la première couche intérieure et une partie centrale de chacune des troisièmes sections transversales en forme de U est en saillie vers l'extérieur,
dans lequel une pluralité de quatrièmes sections transversales en forme de U (221) sont raccordées les unes aux autres dans la seconde couche intérieure et une partie centrale de chacune des quatrièmes sections transversales en forme de U est en saillie vers l'extérieur,
dans lequel une extrémité de la première section transversale en forme de U entre en contact avec une extrémité de la deuxième section transversale en forme de U et la recouvre, pour former un premier trou (130) entre les première et deuxième sections transversales en forme de U,
dans lequel une extrémité de la troisième section transversale en forme de U entre en contact avec une extrémité de la quatrième section transversale en forme de U et la recouvre, pour former un second trou (230) entre les troisième et quatrième sections transversales en forme de U,
dans lequel la taille du premier trou est inférieure à celle du second trou, dans lequel le raccordement extérieur et le raccordement intérieur sont espacées l'une de l'autre, l'extrémité de la première section transversale en forme de U et l'extrémité de la troisième section transversale en forme de U sont espacées l'une de l'autre, et l'extrémité de la deuxième section transversale en forme de U et l'extrémité de la quatrième section transversale en forme de U sont espacées l'une de l'autre, de telle sorte qu'un espace de circulation d'air (300, 301, 305, 306, 307, 308) où air circule soit formé.

2. Raccordement de passerelle (30) selon la revendication 1, comprenant en outre :
une pluralité de premières goupilles de fixation (410) insérées aux extrémités des première et deuxième sections transversales en forme de U (111,121) entrant en contact l'une avec l'autre, pour fixer les première et seconde couches extérieures (110,120) ; et
une pluralité de secondes goupilles de fixation (420) insérées aux extrémités des troisième et quatrième sections transversales en forme de U (211,221) entrant en contact l'une avec l'autre, pour fixer les première et seconde couches intérieures (210,220).

3. Raccordement de passerelle (30) selon la revendication 2, dans lequel chacune des premières goupilles de fixation (410) présente une forme de U ouverte vers les extrémités des première et deuxième sections transversales en forme de U (111, 121),
dans lequel, chacune des secondes goupilles de fixation (420) présente une forme de U ouverte vers les extrémités des troisième et quatrième sections transversales en forme de U (211,221).

4. Raccordement de passerelle (30) selon la revendication 1, dans lequel le raccordement extérieur (100) et le raccordement intérieur (200) comprennent tous deux un caoutchouc de silicone ou un caoutchouc synthétique.

5. Raccordement de passerelle (30) selon la revendication 1, dans lequel un espace de circulation d'air (300) est formé entre la seconde couche extérieure (120) et la seconde couche intérieure (220), et une couche d'air est formée dans l'espace de circulation d'air (300).

6. Raccordement de passerelle (30) selon la revendication 5, dans lequel une première couche de blocage (310) est formée à une extrémité de la seconde couche intérieure (120) et bloque la seconde couche intérieure pour former un premier espace (302) entre la première couche de blocage et la seconde couche extérieure.
une seconde couche de blocage (320) est formée à une extrémité de la seconde couche intérieure (220) et bloque la seconde couche intérieure pour former un deuxième espace (303) entre la seconde couche de blocage et la seconde couche intérieure.

7. Raccordement de passerelle (30) selon la revendication 6, dans lequel l'espace de circulation d'air (30) est divisé en un premier espace (302), un deuxième espace (303) et un troisième espace (304) entre les premier et deuxième espaces, en raison des première et seconde couches de blocage (310, 320).

8. Raccordement de passerelle (30) selon la revendication 6, dans lequel chacune des première et seconde couches de blocage (310, 320) présente une forme de section transversale parmi une forme en U incurvée vers l'extérieur, une forme en S et une forme en ligne droite.

9. Raccordement de passerelle (30) selon la revendication 6, dans lequel chacune des première et seconde couches de blocage (310, 320) est façonnée de sorte qu'une pluralité de surfaces de blocage sont raccordées les unes aux autres pour former un anneau.

10. Raccordement de passerelle (30) selon la revendication 5, dans lequel une pluralité de trous (370) est formée à travers la seconde couche extérieure (120) et la seconde couche intérieure (220).

11. Raccordement de passerelle (30) selon la revendication 10, dans lequel la porosité des trous (370) est égale ou inférieure à 1 %.
